# EUROPÄISCHE PATENTSCHRIFT

(11) **EP 0 570 611 B1**
(45) Veröffentlichungstag und Bekanntmachung des Hinweises auf die Patenterteilung: **28.02.1996**
(21) Anmeldenummer: 92108545.2
(22) Anmeldetag: 20.05.1992
(51) Int. Cl.: C04B 26/14, E01D 19/06

(54) **Überbrückungskonstruktion für Dehnungsfugen**
Bridging device for expansion joints
Dispositif de recouvrement pour joints de dilatation

(43) Veröffentlichungstag der Anmeldung: 24.11.1993
(73) Patentinhaber: Friedrich Maurer Söhne GmbH & Co. KG, D-80750 München (DE)
(72) Erfinder: Erlmeier, Robert, Dr., W-8000 München 40 (DE)
(74) Vertreter: Grosse, Wolfgang, Dipl.-Ing.

(56) Entgegenhaltungen:
- EP-A- 0 309 221
- EP-A- 0 434 214
- EP-A- 0 512 460
- DE-A- 3 031 271
- US-A- 4 736 010
- AMERICAN CHEMICAL SOCIETY SYMPOSIUM SERIES 1983, WASHINGTON DC, USA Seiten 1 - 20 , XP123110 R.S.DRACKE ET AL. 'Elastomer-Modified Epoxy Resins in Coatings Applications'

## Beschreibung

Die Erfindung betrifft eine Überbrückungskonstruktion, insbesondere für Fahrbahn-Dehnungsfugen in Brücken, Parkdecks und dergleichen Bauwerken, bestehend aus zwei quer zur Fahrbahnlängsrichtung verlaufenden metallischen Randprofilen, die über Profilierungen in Polymerbeton verankert sind und ggf. einer beliebigen Anzahl dazwischenliegender, parallel verlaufender Mittelprofile, wobei der zwischen den Profilen gebildete Spalt mittels eines unterhalb der Profiloberkanten angeordneten Dehnungsstreifens aus einem elastisch nachgiebigen Werkstoff abgedichtet ist sowie die Verwendung eines kalthärtenden Kunstharzmörtels zur Herstellung von Polymerbetonen für Überbrückungskonstruktionen.

Überbrückungskonstruktionen für Dehnungsfugen in Brücken, Parkdecks und dergleichen Bauwerken bestehen nach dem Stand der Technik aus zwei, quer zur Fahrbahnlängsrichtung verlaufenden metallischen Randprofilen und ggf. einer beliebigen Anzahl dazwischenliegender, parallel verlaufender Mittelprofile, wobei der durch die Randprofile und Mittelprofile bzw. durch ein Rand- und ein Mittelprofil gebildeter Spalt mittels eines unterhalb der Profiloberkanten angeordneten Dehnungsstreifens aus elastisch nachgiebigem Werkstoff abgedichtet ist. Die Randprofile derartiger Überbrückungskonstruktionen werden über Ankerscheiben mit Bügeln oder Kopfbolzendübel im Stahlbeton verankert.

Eine insbesondere zur Überbrückung kleiner Dehnungsfugen gut geeignete Verankerung der Randprofile besteht darin, die Randprofile über eine Profilierung kontinuierlich mit Hilfe von Kunstharzmörteln auf dem Brücken-Tragwerk zu verankern. Diese, aus einem Kunstharzbindemittel und mineralischen Zuschlagstoffen bestehenden Kunstharzmörtel härten zu Polymerbetonen aus, wobei sie die Randprofile mit dem angrenzenden Beton bzw. der angrenzenden Schwarzdecke der Fahrbahn verbinden.

Die DE-30 31 271 C2 beschreibt eine besondere Ausführungsform dieses erstmals in der DE-24 38 054 A1 bekannt gemachten Verfahrens, wobei die Verankerungsteile aus in Randprofillängsrichtung sinusförmig verlaufenden Rundeisen bestehen. Die Überbrückungskonstruktionen nach DE-30 31 271 C2 sind dabei dadurch gekennzeichnet, daß das Bindemittel des zur Herstellung des Polymerbetons dienenden Kunstharzmörtels aus einem Gemisch aus Epoxidharz und einem blockierten Polyisocyanatprepolymer als Harzkomponente und einem aliphatischen oder cycloaliphatischen Polyamin als Härterkomponente besteht.

Überbrückungskonstruktionen nach DE-30 31 271 C2 mit Bindemitteln aus Bisphenol-A-epoxiden, blockierten Polyisocyanatprepolymeren und aliphatischen bzw. cycloaliphatischen Polyaminen haben wegen ihrer hohen Restflexibilität bei tiefen Temperaturen und ihrer hohen Abreißfestigkeiten an Stahl und Beton einen gewissen Eingang in die Praxis gefinden. Derartige Konstruktionen weisen jedoch, was ihre Dauerstandfestigkeit, ihre Frühbelastbarkeit, die Montage und den Arbeitsschutz anbelangt, eine Reihe von Nachteilen auf, die einem umfassenden Einsatz im Wege stehen.

Als besonders nachteilig hat sich bei Überbrückungskonstruktionen gemäß DE-30 31 271 C2 die Verseifbarkeit der im Polymerbeton enthaltenen, aus den Polyisocyanatprepolymeren stammenden Polyurethanstruktureinheiten erwiesen. Dieser Vorgang wird durch das Auftreten alkalischer Agentien, die durch eindringendes Wasser aus angrenzenden hydraulischen Bindemitteln herausgelöst werden, verursacht und führt mit der Zeit fallweise dazu, daß der Verbund zwischen dem Polymerbetonbalken und der Betondecke der Bahnkonstruktion verloren geht. Dieser systeminhärente Nachteil kann durch Vorsichtsmaßnahmen bei der Verarbeitung oder durch reine Epoxidgrundierungen nicht ausgeschlossen werden, da er einerseits von der Qualität des Betons und andererseits von der Haltbarkeit der auf den Beton aufgebrachten Grundierung abhängt.

Ein weiterer Nachteil der in der DE-30 31 271 C2 offenbarten Überbrückungskonstruktion besteht darin, daß die zu ihrer Herstellung verwendeten Kunstharzmörtel bei Normaltemperatur eine so hohe Konsistenz und eine so niedrige Aushärtungsgeschwindigkeit aufweisen, daß zur Erzielung eines lunkerfreien Vergusses und der im Straßen- und Brückenbau üblicherweise geforderten Frühbelastbarkeit die Herstellung des Kunstharzmörtels und seine Verarbeitung in der Praxis in der Wärme erfolgen muß und die Übergangskonstruktion thermisch nachbehandelt werden muß. Hinzu kommt, daß die Herstellung des Kunstharzmörtels bei Temperaturen von über 70°C in den im Straßenbau üblichen, offenen Mischaggregaten und die Verarbeitung des warmen Kunstharzmörtels von Hand, wegen des Auftretens gesundheitsschädlicher Dämpfe in der Wärme zu einer erhöhten Belastung am Arbeitsplatz führt.

Es wurde nun überraschenderweise gefunden, daß die vorbeschriebenen Nachteile des Standes der Technik dadurch überwunden werden können, daß zur Verankerung der Randprofile ein kalthärtendes Kunstharzbindemittel verwandt wird, dessen Bindemittel frei von blockierten Polyisocyanatprepolymeren ist.

Gegenstand der vorliegenden Erfindung ist eine Überbrückungskonstruktion der eingangs beschriebenen Art, bei der der Polymerbeton mit Hilfe eines Kunstharzbindemittels hergestellt ist, das frei von blockierten Polyisocyanatprepolymeren ist und dessen Harzkomponente kautschukmodifiziertes Polyepoxid und dessen Härterkomponente kautschukmodifiziertes Polyamin enthält.

Gegenstand der Erfindung ist ferner die Verwendung eines Kunstharzbindemittels der vorstehend genannten Art zur Herstellung von Polymerbetonen für die Verankerung von Randprofilen von Überbrückungskonstruktionen im Fahrbahnbau.

Besonders vorteihaft wirkt sich bei den erfindungsgemäß eingesetzten Polymerbetonen aus, daß im Gegensatz zu den in der DE-30 31 271 C2 offenbarten Polymerbetonen, deren Elastifizierung einseitig durch den Gehalt an blockierten Polyisocyanatprepolymeren in der Harzkomponente erfolgt, durch die gleichzeitige Verwendung einer Kautschukmodifizierung sowohl in der Harzkomponente als auch in der Härterkomponente, die Elastifizierung auf beide Bindemittelkomponenten verteilt ist. Hinzu kommt, daß im Gegensatz zu den in der DE-30 31 271 C2 offenbarten Polymerbetonen, deren Haftungsverbesserung wegen der Spaltung der blockierten Isocyanatprepolymeren durch Silane nicht durch epoxyfunktionelle Silane in der Harzkomponente erfolgen kann, hier der Harzkomponente solche epoxyfunktionellen Silane zugesetzt werden können, so daß dieser Nachteil bei den Bindemittelsystemen der Erfindung entfällt.

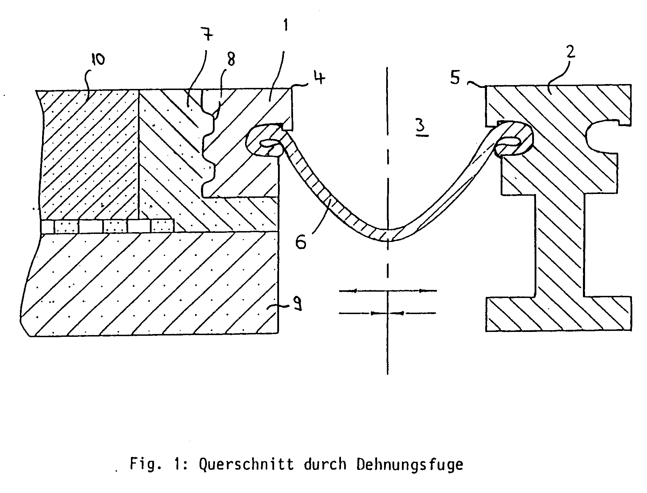

Fig. 1 gibt den typischen Aufbau einer solchen Überbrückungskonstruktion wieder. Zwischen einem quer zur Fahrbahnlängsrichtung verlaufendem metallischen Randprofil 1 und einem parallel dazu verlaufenden Mittelprofil 2 befindet sich ein Spalt 3, der die eigentliche Dehnungsfuge bildet. Unterhalb der Oberkanten 4, 5 der Profile 1 und 2 ist ein Dehnungsstreifen 6 aus einem elastischen nachgiebigen Werkstoff angeordnet, der die Dehnungsfuge 3 nach oben hin abdichtet. Das Randprofil 1 ist in einer Polymerbetonschicht 7 verankert, wobei zur besseren Verbindung mit dem Polymerbeton Profilierungen 8 vorgesehen sind. Die Polymerbetonschicht 7 selbst grenzt an den Unterbau 9 und die Fahrbahndecke 10 an.

Kautschukmodifizierte Polyepoxide im Sinne der Erfindung sind insbesondere flüssige Epoxide mit einer Epoxidfunktionalität von 1,6 bis 2,0 und einem Kautschukgehalt von 68 bis 98 Gew.-%, vorzugsweise jedoch mit einem solchen von 80 bis 95 Gew.-%. Die Epoxidgruppen können endständig und/oder in der Seitenkette der Moleküle angeordnet sein. Der elastomere Strukturanteil der erfindungsgemäß zu verwendenden Polyepoxide besteht insbesondere aus Polyenen oder Diencopolymeren, vorzugsweise aus Polybutadien, Butadien-Styrol-Copolymeren oder Butadien-Acrylnitril-Copolymeren.

Die Harzkomponente der zur Herstellung der erfindungsgemäß zu verwendenden Kunstharzbindemittels enthält außer den kautschukmodifizierten Polyepoxiden zur Herabsetzung des Epoxidäquivalentgewichtes und der Viskosität zweckmäßigerweise mindestens ein anderes Epoxidharz und/oder einen epoxyfunktionellen Reaktivverdünner, wie zum Beispiel Bisphenol-A-diglycidylether, Bisphenol-F-diglycidylether, Bisphenol-A/F-diglycidylether, cycloaliphatische Epoxidharze und Epoxynovolackharze; Polyethylenglycoldiglycidylether, Kresylglycidylether, Hexandioldiepoxid und dergleichen. Die Harzkomponente enthält darüberhinaus in der Regel Epoxisilan als Haftvermittler in Mengen von 1 bis 5 Gew.-% bezogen auf die Harzkomponente, wie zum Beispiel 3-Glycidyloxypropyltrimenthoxysilan, 2-(3,4-Epoxycyclohexyl)ethyltrimenthoxysilan, etc. Zweckmäßigerweise enthält die Harzkomponente wenigstens etwa 10 Gew.-%, bezogen auf die Polyepoxide, kautschukmodifiziertes Polyepoxid, vorzugsweise etwa 15 bis 30 Gew.-%.

Die Härterkomponente der erfindungsgemäß zu verwendenden Kunstharzbindemittel enthält außer den kautschukmodifizierten Polyaminen zweckmäßigerweise einen oder mehrere an sich bekannte, zur Kaltaushärtung geeignete Epoxidhärter, insbesondere polyfunktionelle aliphatische, araliphatische oder cycloaliphatische Polyamine, deren Kondensationsprodukte mit Formaldehyd und Phenol resp. alkylsubstitierten Phenolen, Epoxid-Amin-Addukte cycloaliphatischer und araliphatischer Polyamine, Diaminoarylcyclohexylamine, Arylindandiamine und alkylierte Imidazole, wie zum Beispiel Diethylentriamin, Triethylentetramin, Tetraethylenpentamin, Hexamethylendiamin, Trimethylhexamethylendiamin, 2-Methylpentamethylendiamin, Isophorondiamin, 4-Aminoethylpiperazin, Diethyloltoluoldiamin, Diaminobenzylcyclohexyldiamin, Phenylindandiamin sowie ihre Kondensations- und Additionsprodukte. Die Härterkomponente enthält darüberhinaus in der Regel mindestens einen Haftvermittler in Form eines Aminosilans, wie zum Beispiel 3-Aminopropylmethyldiethoxysilan, 3-Aminopropyltrimethoxysilan, 3-Aminopropyltriethoxysilan, 3-Aminopropyltris(2-methoxyethoxyethoxy)silan oder N-Aminoethyl-3-aminopropyltrimethoxysilanmethoxysilan. Zweckmäßigerweise enthält die Härterkomponente wenigstens etwa 10 Gew.-%, bezogen auf die Polyamine, kautschukmodifiziertes Polyamin, vorzugsweise etwa 15 bis 30 Gew.-%. Naturgemäß kann sowohl die Harz- als auch die Härterkomponente mehr als nur einen kautschukmodifizierten Bestandteil aufweisen.

Die zur Herstellung der erfindungsgemäß zu verwendenden Kunstharzbindemittel dienenden Harz- und Härterkomponenten können außerdem Reaktionsbeschleuniger, Weichmacher, Extender, Farbstoffe, Verlaufmittel, Entschäumer und Stabilisatoren nach dem Stand der Technik enthalten. Bevorzugte Extender sind Steinkohlenteere, Kohlenwasserstoffharze, Cumaron- und Cumaron-Inden-Harze.

Die Zuschlagstoffe zur Herstellung der erfindungsgemäß zu verwendenden Harzbindemittel bestehen, je nach Leistungsanforderung an den Polymerbeton, aus Mischungen bauüblicher Zuschlagstoffe, wie Sand, Kies, Split und Kalkstein etc. Zuschlagstoffe für Hochleistungdehnungsfugen bestehen in der Regel aus gewaschenem und getrocknetem Quarzsand definierter Sieblinie in Verbindung mit Quarzmehl. Den Zuschlagstoffen können zur Verminderung der Ablaufneigung des Kunstharzbindemittels an Gefällen Stellmittel in Form von Mineralfasern in Mengen bis zu 5 Gew.%, bezogen auf den Kunstharzbeton, zugefügt werden.

Das Harz/Härter-Massenverhältnis beträgt bei den erfindungsgemäß einzusetzenden Bindemitteln vorzugsweise 4 : 1 bis 1 : 4, besonders bevorzugt 2 : 1 bis 1 : 2. Das Bindemittel/ Zuschlagstoff-Massenverhältnis beträgt bei den erfindungsgemäß einzusetzenden Polymerbetonen vorzugsweise 1 : 1 bis 1 : 10, besonders bevorzugt jedoch 1 : 3 bis 1 : 6.

Den erfindungsgemäß zu verwendenden Kunstharzbindemitteln können mercaptofunktionelle Beschleuniger in Mengen bis zu 10 Gew.-%, bezogen auf das Bindemittel, zugesetzt werden, wodurch die Aushärtegeschwindigkeit erhöht und die Temperaturgrenze der Härtung stark erniedrigt wird. Derartig beschleunigte Harzbindemittel lassen eine Dehnungsfugenmontage auch noch bei Temperaturen knapp über dem Gefrierpunkt zu, zumal bei den erfindungsgemäß zu verwendenden Kunstharzbeton durch die mögliche Verteilung des Haftvermittlers auf die Harz- und die Härterkomponente wesentlich günstigere Voraussetzungen für die Haftung an feuchten Untergründen bestehen. Unter mercaptofunktionellen Beschleunigern sind vorzugsweise hydroxylgruppenhaltige aliphatische Polymercaptane mit einer H-S-Funktionalität von mindestens 3 zu verstehen.

Die vorliegende Erfindung wird anhand eines repräsentativen Beispiels veranschaulicht, das die Zusammensetzung des Kunstharzbindemittels, die Materialkennwerte des resultierenden Polymerbetons und dessen Verbundeigenschaften als Bestandteil der erfindungsgemäßen Überbrückungskonstruktionen zeigt.

Zur Herstellung des Kunstharzbetons werden

### 8,33 Gew.-Tl. Harzkomponente A

bestehend aus 25 Gew.-% kautschukmodifiziertem Polyepoxid, 56 Gew-% Bisphenol-A/F-diglycidylether, 16 Gew.-% Alkandioldiepoxid, 1 Gew-% Entschäumer und 2 Gew.-% Epoxisilan, mit

### 8,33 Gew.-Tl. Härtekomponente B

bestehend aus 10 Gew.-% kautschukmodifiziertem Polyamin mit einem AEW von 450, 46 Gew.-% aliphatischen, cycloaliphatischen und heterocyclischen Diaminen, 37 Gew.-% Steinkohlenteer, 5 Gew.-% Weichmacher und 2 Gew.% Aminosilan, 1 bis 2 min. homogenisiert und in dieses Bindemittel

### 83,34 Gew.-Tl. Zuschlagstoffe

bestehend aus 5 Gew.-% Quarzmehl, 90 Gew.-% Quarzsand der Körnung 1/11 mm und 5 Gew.-% Wollastonit mit 3 mm Faserlänge, eingearbeitet.

Der Kunstharzbeton obiger Zusammensetzung härtet innerhalb von 6 bis 12 Stunden zu einem belastbaren Polymerbeton aus, dessen Eigenschaften im vollständig ausgehärteten Zustand in der folgenden Tabelle zusammengefaßt sind:

| EIGENSCHAFTEN | DIMENSION | PRÜFTEMPERATUR | | |
|---|---|---|---|---|
| | | +20°C | ±0°C | -20°C |
| Zugfestigkeit β_{Z} im einaxialen Zugversuch | N/mm² | 9 | 14,5 | 15 |
| Druckfestigkeit β_{D} an Probewürfeln mit 40 mm Kantenlänge | N/mm² | 45 | 63 | 72 |
| Dynamischer E-Modul aus dem Schubmodul bei 5,5 Hz | N/mm² | 2790 | 3160 | 3300 |
| Querdehnzahl µ | - | 0,30 | 0,25 | 0,24 |
| Abreißfestigkeit mit Herion-Gerät: | | | | |
| Polymerbeton/Stahl, sandgestrahlt | N/mm² | 4,6 | 6,3 | 9,7 |
| Polymerbeton/Stahl, zinkstaubgrundiert | N/mm² | 5,1 | 5,1 | 5,1 |
| Polymerbeton/Beton | N/mm² | 4,0 | 3,3 | 3,0 |

Die erfindungsgemäßen Überbrückungskonstruktionen sind aufgrund der vorstehenden Eigenschaften der zur Verankerung ihrer Randprofile erfindungsgemäß zu verwendenden Polymerbetone in hervorragender Weise zur Überbrückung von Dehnungsfugen in Brücken, Parkdecks und dergleichen Bauwerken geeignet.

## Patentansprüche

1. Überbrückungskonstruktion, insbesondere für Fahrbahn-Dehnungsfugen in Brücken, Parkdecks und dergleichen Bauwerken, bestehend aus zwei quer zur Fahrbahnlängsrichtung verlaufenden metallischen Randprofilen (1), die über Profilierungen (8), Ankerscheiben und Bügel oder Kopfbolzendübel in Polymerbeton (7) verankert sind, und ggf. einer beliebigen Anzahl dazwischenliegender, parallel verlaufender Mittelprofile (2), wobei der zwischen den Profilen (1, 2) gebildete Spalt (3) mittels eines unterhalb der Profiloberkanten (4, 5) angeordneten Dehnungsstreifens (6) aus einem elastisch nachgiebigen Werkstoff abgedichtet ist, **dadurch gekennzeichnet**, daß der Polymerbeton (7) mit einem kalthärtenden Kunstharzbindemittel aus einer kautschukmodifiziertes Polyepoxid enthaltenden Harz- komponente und einer kautschukmodifiziertes Polyamin enthaltenden Härterkomponente erstellt ist, das frei von blockierten Polyisocyanaten ist.

2. Überbrückungskonstruktion nach Anspruch 1, **dadurch gekennzeichnet**, daß das kautschukmodifizierte Polyepoxid ein flüssiges Epoxid mit einer Epoxidfunktionalität von 1,6 bis 2,0 und einem elastomeren Strukturanteil von 68 bis 98 Gew.-% ist.

3. Überbrückungskonstruktion nach Anspruch 1 oder 2, **dadurch gekennzeichnet**, daß der elastomere Strukturanteil im kautschukmodifizierten Polyepoxid aus Polyenen und/oder Diencopolymeren besteht, insbesondere aus Polybutadien, Butadien-Styrol- oder Butadien-Acrylnitril-Copolymeren.

4. Überbrückungskonstruktion nach einem der vorstehenden Ansprüche**, dadurch gekennzeichnet**, daß das kautschukmodifizierte Polyamin ein flüssiges Amin mit einer Aminfunktionalität von 1,8 bis 2,2 und einem elastomeren Strukturanteil von 50 bis 90 Gew.-% ist, wobei Aminfunktionalität in Form von primären und/oder sekundären Aminogruppen vorliegt.

5. Überbrückungskonstruktion nach einem der vorstehenden Ansprüche, **dadurch gekennzeichnet**, daß der elastomere Strukturanteil des kautschukmodifizierten Polyamins aus Polyenen und/oder Diencapolymeren besteht, insbesondere aus Polybutadien, Butadien-Styrol- oder Butadien-Acrylnitril-Copolymeren.

6. Überbrückungskonstruktion nach Anspruch 5, **dadurch gekennzeichnet**, daß das kautschukmodifizierte Polyamin ein Butadien-Acrylnitril-Copolymer mit zwei endständigen 2-Methyl-pentamethylendiaminresten und einem Acrylnitrilgehalt von 10 bis 30 Gew.-% im Kautschukteil ist.

7. Überbrückungskonstruktion nach einem der vorstehenden Ansprüche, **dadurch gekennzeichnet**, daß die Harzkomponente wenigstens ein weiteres Polyepoxid und/oder die Härterkomponente wenigstens ein weiteres Polyamin enthält.

8. Überbrückungskonstruktion nach einem der vorstehenden Ansprüche, **dadurch gekennzeichnet**, daß die Harzkomponente epoxidfunktionelle Silane in Mengen von 1 bis 5 Gew.-%, bezogen auf die Harzkomponente, enthält.

9. Überbrückungskonstruktion nach einem der vorstehenden Ansprüche**, dadurch gekennzeichnet**, daß der Kunstharzmörtel hydroxylgruppenhaltige Polymercaptane mit einer HS-Funktionalität von wenigstens 3 in Mengen von 1 bis 10 Gew.-%, bezogen auf das Bindemittel, enthält.

10. Überbrückungskonstruktion nach einem der vorstehenden Ansprüche, **gekennzeichnet durch** ein Harz/Härter-Gewichtsverhältnis von 4 : 1 bis 1 : 4.

11. Überbrückungskonstruktion nach einem der vorstehenden Ansprüche, **gekennzeichnet durch** ein Bindemittel/Zuschlagstoff-Gewichtsverhältnis von 1 : 1 bis 1 :10.

12. Verwendung eines kalthärtenden Kunstharzbindemittels, wie in einem der vorstehenden Ansprüche definiert, zur Herstellung von Polymerbetonen für Überbrückungskonstruktionen im Fahrbahnbau.

## Claims

1. Bridging device, in particular for road expansion joints in bridges, parking areas or similar buildings, consisting of two metallic edge profiles (1) extending across the longitudinal direction of the road and anchored by means of profiled structures (8), anchoring disks and bows or stud shear connectors with head in concrete polymer (7) and, if applicable, an arbitrary number of central profiles (2) extending there-between and in parallel with one another, wherein the gap (3) formed between the profiles (1, 2) is sealed by means of an extension strip (6) arranged below the upper profile edges (4, 5) and made from an elastic resilient mateiral, **characterized in that** the concrete polymer (7) is made from a work-hardening synthetic resin binder from a resin component containing caoutchouc-modified polyepoxide and a hardening component containing caoutchouc-modified polymine being free of blocked polyisocyanates.

2. Bridging device as defined in claim 1, **characterized in that** the caoutchouc-modified polyepoxide is a liquid epoxy resin showing an expoxy functionality of 1.6 to 2.0 and having an elastomere structural portion of 68 to 98 percent by weight.

3. Bridging device as defined in claim 1 or 2, **characterized in that** the elastomere strutural portion consists in the caoutchouc-modified polyexpoxide from polyenes and/or diene copolymers, in particular from polybutadiene, butadiene styrene or butadien acrylnitril copolymers.

4. Bridging device as defined in one of the preceding claims, **characterized in that** the caoutchouc-modified polyamin is a liquid amin having an amin functionality of 1.8 to 2.2 and an elastomere structural portion of 50 to 90 percent by weight, the amin functionality being present in form of primary and/or secondary amino groups.

5. Bridging device as defined in one of the preceding claims, **characterized in that** the elastomere structural portion of the caoutchouc-modified polyamin consists of polyenes and/or diene copolymers, in particular of polybutadiene, butadiene styrene or butadiene acrylnitril copolymers.

6. Bridging device as defined in claim 5, **characterized in that** the caoutchouc-modified polyamin is a butadiene acrylnitril copolymer with two terminal 2-methylpentamethylene diamin residues and an acrylnitril content of 10 to 30 percent by weight in the caoutchouc portion.

7. Bridging device as defined in one of the preceding claims, **characterized in that** the resin component contains at least one further polyepoxide and/or that the hardener component contains at least one further polyamin.

8. Bridging device as defined in one of the preceding claims, **characterized in that** the resin component contains epoxide-functional silanes in amounts of 1 to 5 percent by weight related to the resin component.

9. Bridging device as defined in one of the preceding claims, **characterized in that** the synthetic-resin mortar contains polymer capatanes containing hydroxyl groups with a HS functionality of at least 3 in amounts of 1 to 10 percent by weight related to the binder.

10. Bridging device as defined in one of the preceding claims, **characterized by** a resin/hardener ratio of 4: 1 to 1:4.

11. Bridging device as defined in one of the preceding claims, **characterized by** a binder/additive weight ratio of 1:1 to 1:10.

12. Use of a work-hardening synthetic-resin binder, as defined in one of the preceding claims, for preparing concrete polymer for bridiging constructions in road construction.

## Revendications

1. Dispositif de recouvrement, notamment pour joints de dilatation du tablier en ponts, au parcs à voitures et caetera, comprenant deux profilés marginales metalliques (1) courrant en travers de sens longitudinal du tablier, qui sont ancrés dans de béton au polymère (7) au moyen de profilés (8), de disques d'ancrage et d'archets ou de chevilles à boulon avec tête, et le cas échéant n'importe quel nombre de profilés centrals (2) interposants courrant en parallèle, la fente (3) formée entre les profilés (1, 2) étant étanchée au moyen d'une bande d'alongement (6) formée d'un matériau élastiquement flexible et arrangée au-dessous des arêtes supérieures de profilé (4, 5). **caractérisé en ce que** le le béton au polymère (7) est préparé avec un liant durcissant au froid en résine synthétique en une composante de résine comprennant de polyépoxyde caoutchouc-modifié et une composante-durcisseur comprennant de polyamine caoutchouc-modifié, ledit liant ne comprennant pas de polyisocyanates bloqués.

2. Dispositif de recouvrement selon la revendication 1, **caractérisé en ce que** le polyépoxyde caoutchouc-modifié est un époxyde liquide avec une fonctionnalité d'époxyde de 1,6 à 2,0 et avec un pourcentage de structure élastomère de 68 à 98 pourcentage en poids.

3. Dispositif de recouvrement selon la revendication 1 ou 2, **caractérisé en ce que** le pourcentage de structure élastomére dans le polyépoxyde caoutchouc-modifié est constitué de polyènes et/ou diène copolymères, notamment de polybutadiène, butadiène styrène ou butadiène acrylnitrile copolymères.

4. Dispositif de recouvrement selon quelconque des revendications précédentes, **caractérisé en ce que** le polyamine caoutchouc-modifié est un amine liquide avec une fonctionnalité d'amine de 1,8 à 2,2 et un pourcentage de structure élastomère de 50 à 90 pourcentage en poids, la fonctionnalité d'amine étant presente en forme des groupes amino primaires et/ou sécondaires.

5. Dispositif de recouvrement selon quelconque des revendications précédentes, **caractérisé en ce que** le pourcentage de structure élastomère du polyamine caoutchouc-modifié est constitué de polyènes et/ou diène copolymères, notamment de polybutadiène, butadiène styrène ou butadiène acrylnitrile copolymères.

6. Dispositif de recouvrement selon la revendication 5, **caractérisé en ce que** le polyamine caoutchouc-modifié est un butadiène acrylnitrile copolymère avec deux résidus 2-methyl-pentamethylène diamine en fin de chaîne et un content d'acrylnitrile de 10 à 30 pourcentage en poids dans le pourcentage de caoutchouc.

7. Dispositif de recouvrement selon quelconque des revendications précédentes, **caractérisé en ce que** la composante de résine comprend au moins un autre polyépoxyde et/ou la composante-durcisseur comprend au moins un autre polyamine.

8. Dispositif de recouvrement selon quelconque des revendications précédentes, **caractérisé en ce que** la composante de résine comprend de silanes époxydefonctionnellements en quantités de 1 à 5 pourcentage en poids relativement à la composante de résine.

9. Dispositif de recouvrement selon quelconque des revendications précédentes, **caractérisé en ce que** le mortier en résine synthétique comprend un polymère capatane contenant de groupes hydroxyles avec une fonctionnalité HS de au moins 3 en quantités de 1 à 10 pourcentage en poids relativement au liant.

10. Dispositif de recouvrement selon quelconque des revendications précédentes, **caractérisé en ce que par** une relation de poids de résine à durcisseur de 4: 1 à 1:4.

11. Dispositif de recouvrement selon quelconque des revendications précédentes, **caractérisé en ce que par** une relation de poids de liant à l'addition de 1:1 à 1:10.

12. Emploi d'un liant synthétique en résine durcissant au froid, comme caractérisé dans quelconque des revendications précédents, afin de préparer de bétons au polymère pour de dispositifs de recouvrement dans la construction des pistes.
